# FASCICULE DE BREVET EUROPEEN

(11) **EP 1 869 270 B1**
(45) Date de publication et mention de la délivrance du brevet: **07.12.2011**
(21) Numéro de dépôt: 06709340.1
(22) Date de dépôt: 17.02.2006
(51) Int. Cl.: E04H 12/12, E04C 3/34, E02D 5/30, F16L 9/153

(54) **PROCEDE DE RENFORCEMENT D'UNE STRUCTURE TUBULAIRE METALLIQUE**
VERFAHREN ZUR VERSTÄRKUNG EINER RÖHRENFÖRMIGEN METALLSTRUKTUR
METHOD FOR REINFORCING A METAL TUBULAR STRUCTURE

(30) Priorité: 22.02.2005 FR 0501789
(43) Date de publication de la demande: 26.12.2007
(73) Titulaire: SOLETANCHE FREYSSINET, 92500 Rueil Malmaison (FR); TDF, 75015 Paris (FR)
(72) Inventeur: TOURNEUR, Christian, F-78320 Le Mesnil Saint Denis (FR); ANTOINE, Marc, F-31750 Escalquens (FR); ZIVANOVIC, Ivica, F-95400 Arnouville (FR); AUTISSIER, Alain, F-19300 Egleton (FR); FAILLIE, Rolland, F-31200 Toulouse (FR)
(74) Mandataire: Cabinet Plasseraud
(86) Numéro de dépôt international: PCT/FR2006/000370
(87) Numéro de publication internationale: WO 2006/090048

(56) Documents cités:
- WO-A-2004/038106
- AU-A- 5 284 273
- AU-A- 8 517 582
- DE-A1- 19 644 834
- US-A- 4 783 940
- US-B1- 6 284 336

## Description

La présente invention concerne un procédé de renforcement d'une structure tubulaire métallique en fonctionnement.

Une telle structure tubulaire métallique est par exemple du type treillis d'éléments tubulaires. Elle consiste alors en une pluralité de profilés tubulaires métalliques assemblés entre eux.

La forme de la structure tubulaire métallique est généralement adaptée à son utilisation. Elle peut ainsi former un pylône supportant des antennes de transmission radio, pour de la diffusion hertzienne notamment, ou bien une structure off-shore, etc.

Dans tous les cas, une telle structure est soumise à des efforts divers. S'agissant d'un pylône de transmission radio par exemple, ces efforts comprennent notamment l'effet du poids des antennes disposées sur le pylône ainsi que l'effet d'actions extérieures telles que le poids de la neige, la pression du vent, les phénomènes sismiques, etc.

Les structures sont donc dimensionnées, dès leur conception, pour supporter des charges de service et des charges accidentelles, en fonction des équipements installés sur ces structures, par exemple un nombre et un type d'antennes surmontant un pylône.

Les évolutions technologiques et les contraintes d'exploitation conduisent parfois à remplacer les équipements utilisés par des équipements différents ou bien à en ajouter d'autres. Les charges d'exploitation et l'action des sollicitations extérieures agissantes s'en trouvent alors modifiées avec pour conséquence qu'il est nécessaire de renforcer la structure en place ou de la remplacer.

Les méthodes de renforcement connues consistent à ajouter ou à remplacer des éléments de la structure métallique en place de façon à augmenter les sections de métal dans les proportions souhaitées pour répondre aux nouvelles sollicitations. Ce mode de restructuration est généralement complexe, en particulier au niveau des noeuds d'assemblage de la structure. Il implique en outre des perturbations ou même des arrêts d'exploitation liés au démontage des équipements Installés, par exemple des antennes, pendant la période d'intervention. Ces arrêts sont coûteux et très contraignants pour l'exploitant. De plus, ces renforcements modifient l'aspect extérieur de la structure et peuvent donc nécessiter une obtention préalable d'autorisation de travaux, susceptible de retarder considérablement l'intervention.

WO 2004/038106 divulgue une autre méthode de renforcement d'une structure tubulaire métallique, dans laquelle une couche métallique de renforcement est placée à distance d'une surface interne de la structure tubulaire de manière à former une cavité entre ladite couche de renforcement et la structure tubulaire. Une matière plastique ou polymère est injectée dans cette cavité, de façon qu'après durcissement, elle adhère à la couche de renforcement et à la surface interne de la structure tubulaire.

Un tel agencement apporte un renfort en flexion à la structure tubulaire métallique. En revanche, il n'améliore aucunement la résistance aux efforts de traction et/ou compression qui sont pourtant les plus significatifs au niveau d'une telle structure.

AU 85 175/82 divulgue un procédé de fabrication d'une perche comprenant une gaine externe qui, lorsqu'elle est placée horizontalement en rotation, peut être tapissée sur sa paroi interne par un matériau cimentaire. En revanche, il ne divulgue pas, ni ne suggère, de renforcer une structure tubulaire métallique déjà en fonctionnement.

Un but de la présente invention est de renforcer les structures tubulaires métalliques en traction et/ou en compression, tout en limitant les inconvénients susmentionnés.

Un but plus particulier de l'invention est de renforcer les structures tubulaires métalliques sans arrêt ou perturbation de l'exploitation à laquelle ces structures participent.

L'invention propose ainsi un procédé de renforcement d'une structure tubulaire métallique en fonctionnement comprenant les étapes suivantes :
- Introduire à l'intérieur de la structure tubulaire métallique en fonctionnement, une pluralité d'éléments sensiblement linéaires ayant une résistance à la traction supérieure à une valeur prédéterminée; et
- injecter un produit de remplissage durcissable à l'intérieur de la structure tubulaire métallique en fonctionnement, de façon à ce que le produit de remplissage durcissable vienne en contact avec une surface interne de la structure tubulaire métallique et enrobe les éléments sensiblement linéaires de ladite pluralité.

La mise en place, à l'intérieur de la structure, des éléments sensiblement linéaires contribue au renforcement de la structure en traction. L'injection du produit de remplissage durcissable permet en outre de former un composite monolithique apte à travailler en traction et en compression. On augmente ainsi la section résistante de la structure tubulaire et l'inertie prise en compte. En outre, ce renforcement interne de la structure tubulaire métallique n'en modifie pas l'apparence extérieure.

Selon des modes de réalisation particuliers de l'invention pouvant être combinés entre eux de toutes les manières envisageables :
- les éléments sensiblement linéaires de ladite pluralité comprennent des joncs de carbone ;
- les éléments sensiblement linéaires de ladite pluralité comprennent des fils et/ou des torons ;
- la structure tubulaire métallique est installée de façon à avoir une extrémité inférieure ancrée et une extrémité supérieure libre, et les éléments sensiblement linéaires de ladite pluralité sont introduits à partir de ladite extrémité supérieure libre de la structure tubulaire métallique ;
- les éléments sensiblement linéaires de ladite pluralité sont introduits à l'intérieur de la structure tubulaire métallique de façon à former un faisceau dont la répartition géométrique est prédéterminée ;
- les éléments sensiblement linéaires de ladite pluralité sont introduits à l'intérieur de la structure tubulaire métallique par l'intermédiaire de trous respectifs d'une grille reliée à la structure tubulaire métallique ;
- les éléments sensiblement linéaires de ladite pluralité sont ancrés sur la grille après avoir été introduits à l'intérieur de la structure tubulaire métallique ;
- la structure tubulaire métallique est installée de façon à avoir une extrémité inférieure ancrée et une extrémité supérieure libre, les éléments sensiblement linéaires de ladite pluralité sont en outre introduits à partir de ladite extrémité supérieure libre de la structure tubulaire métallique par l'intermédiaire de trous respectifs d'un lest, les trous du lest étant répartis de façon sensiblement correspondante aux trous de la grille ; on fait descendre le lest, à l'aide d'un filin, depuis la grille vers l'extrémité inférieure de la structure tubulaire métallique après avoir ancré les éléments sensiblement linéaires de ladite pluralité sur la grille ;
- le produit de remplissage durcissable comprend un coulis de ciment ;
- le produit de remplissage durcissable comprend un béton liquide de liant minéral ou synthétique ;
- le produit de remplissage durcissable comprend une résine ;
- un agrégat est fixé sur la périphérie des éléments sensiblement linéaires de ladite pluralité à l'aide d'une résine avant l'introduction desdits éléments sensiblement linéaires à l'intérieur de la structure tubulaire métallique ;
- les éléments sensiblement linéaires de ladite pluralité comprennent des reliefs tels que des stries sur leur périphérie ;
- des fils sont accrochés sur au moins une portion de certains au moins des éléments sensiblement linéaires de ladite pluralité pour renforcer davantage des portions correspondantes de la structure tubulaire métallique.

D'autres particularités et avantages de la présente invention apparaîtront dans la description ci-après d'exemples de réalisation non limitatifs, en référence aux dessins annexés, dans lesquels :
- la figure 1 est un schéma montrant une structure tubulaire métallique renforcée selon l'invention, et
- la figure 2 est un schéma montrant une partie d'un jonc de carbone utilisé pour renforcer une structure tubulaire métallique selon un mode de réalisation de l'invention.

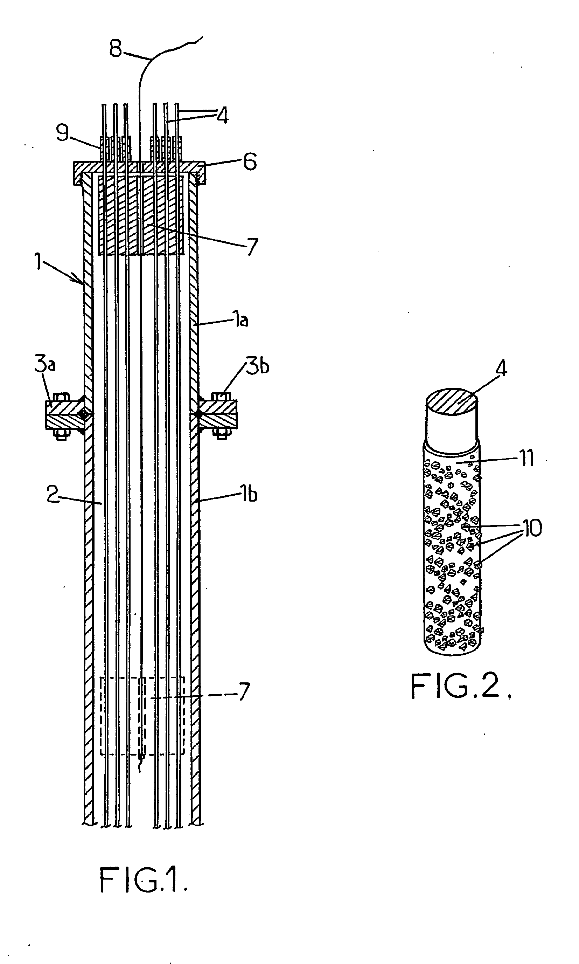

La figure 1 montre une structure tubulaire métallique 1 renforcée selon l'invention. Cette structure 1 est par exemple utilisée pour former un pylône supportant, sur son extrémité supérieure, des antennes de transmission radio, par exemple pour de la diffusion hertzienne, dans le but d'émettre ou de relayer des émissions d'ondes radio-électriques. En alternative, la structure 1 de la figure 1 peut faire partie d'une structure off-shore, c'est-à-dire utilisée en mer. Une telle structure peut être ancrée à son extrémité inférieure (non représentée) par exemple dans le sol, tandis que son extrémité supérieure, visible sur la figure 1, est libre.

La structure 1 de la figure 1 comprend plusieurs profilés tubulaires, dont deux (1a, 1b) sont visibles sur la figure. Ces profilés forment des tronçons creux soudés. Chaque tronçon peut par exemple avoir une hauteur allant jusqu'à une dizaine de mètres environ. Les profilés sont assemblés entre eux, sur place, par fixation de brides d'assemblage 3a à l'aide de boulons de fixation 3b. Ces brides constituent des points de faiblesse de la structure 1 que l'invention vise à renforcer particulièrement. En variante, la structure tubulaire métallique pourrait être d'un seul tenant, en particulier si sa hauteur est faible.

Le renforcement de la structure tubulaire 1 selon l'invention comprend l'introduction, à l'intérieur de la structure 1, d'une pluralité d'éléments sensiblement linéaires ayant une résistance à la traction supérieure à une valeur prédéterminée. Cette valeur peut être choisie en fonction des sollicitations susceptibles de s'exercer sur la structure. On peut par exemple utiliser des joncs de composite en fibres de carbone 4 de faible diamètre, par exemple autour de 6 mm. Ces joncs de carbone sont de préférence introduits pour s'étendre selon la longueur de la structure tubulaire, comme illustré sur la figure 1. Ils sont avantageusement disposés en faisceau dont la résistance et le module de traction sont d'environ 2400 MPa et 160 GPa.

Les joncs de carbone 4 ont pour avantage d'être souples et légers. Ils peuvent en outre être enroulés sur une grande longueur et peuvent ainsi être facilement transportés. Cela évite d'avoir à réaliser des aboutements par manchonnage. De plus, les joncs de carbone permettent une mise en oeuvre aisée et manuelle dans des conditions difficiles de travail en hauteur. Cette mise en oeuvre est notamment facilitée par la raideur et l'absence de déformations rémanentes après enroulement et déroulement des joncs de carbone.

En variante, d'autres éléments linéaires peuvent être utilisés à la place des joncs de carbone, comme des fils, par exemple des fils de carbone sous forme de fibres, ou bien des torons.

Dans l'exemple illustré sur la figure 1, les joncs de carbone 4 sont par exemple introduits à l'intérieur de la structure tubulaire 1, à partir de son extrémité supérieure libre. Cette introduction est avantageusement réalisée de telle que sorte que les joncs, après leur introduction, forment un faisceau dont la répartition géométrique est prédéterminée.

Cela est par exemple réalisé à l'aide d'une grille 6 reliée à l'extrémité supérieure libre de la structure tubulaire 1. Cette grille 6 est pourvue de trous à travers lesquels les joncs de carbone 4 sont respectivement introduits à l'intérieur de la structure tubulaire 1. On assure ainsi un classement entre les joncs de carbone, qui maintient un certain écartement entre eux. Une fois les joncs de carbone introduits à l'intérieur de la structure tubulaire 1, on fixe avantageusement les joncs de carbone 4 sur la grille 4 à l'aide d'ancrages 9.

Pour conserver la répartition géométrique du faisceau de joncs 4 à distance de l'extrémité supérieure libre de la structure tubulaire 1, on dispose avantageusement un lest perforé 7 sous la grille 6. Le lest 7 possède le même arrangement de trous que la grille 6. Les joncs de carbone sont ainsi introduits à l'intérieur de la structure tubulaire 1 par l'intermédiaire de trous respectifs de la grille 6 et de trous respectifs correspondants du lest perforé 7. Une fois que les joncs ont été introduits et éventuellement ancrés sur la grille 6, on fait alors descendre le lest perforé 7 à l'intérieur de la structure tubulaire 1 à l'aide d'un filin 8, jusqu'à la position représentée en trait interrompu sur la figure 1. L'écartement souhaité entre les joncs de carbone 4 est ainsi respecté entre l'extrémité supérieure libre de la structure tubulaire 1 et la position finale du lest perforé 7.

On note que les joncs de carbone 4 peuvent être introduits à l'intérieur de la structure tubulaire 1, les uns après les autres, ou bien simultanément en faisceau.

On note en outre que les joncs de carbone 4, ou tous autres éléments sensiblement linéaires utilisés dans le renfort de la structure tubulaire, pourraient aussi être introduits à l'intérieur de cette structure à partir de son extrémité inférieure. A cet effet, un orifice de faible diamètre peut être réalisé dans les membrures basses de la structure pour permettre l'introduction des joncs.

Une fois les joncs de carbone 4 introduits à l'intérieur de la structure tubulaire 1, on injecte un produit de remplissage durcissable à l'intérieur de cette structure, de façon à ce que ce produit vienne en contact avec une surface interne de la structure tubulaire 1 et enrobe les joncs de carbone 4. Dans le mode de réalisation où un écartement doit être respecté entre les joncs de carbone, on choisira de préférence cet écartement de manière à ce qu'il permette au produit de remplissage de pénétrer entre les joncs et enrobe ainsi complètement chacun d'entre eux.

Le produit de remplissage injecté à l'intérieur de la structure tubulaire 1 est par exemple un coulis de ciment. Un tel coulis doit être injecté dans un état suffisamment fluide pour remplir l'espace intérieur 2 de la structure tubulaire 1, assurer un contact adhérent avec la surface interne de la structure tubulaire 1 et enrober les joncs de carbone 4. Après durcissement, le coulis de ciment obtient une résistance à la compression autour de 65 MPa à 28 jours.

Un tel composite monolithique, incorporant les joncs, augmente la section résistante de la structure tubulaire 1 et améliore ainsi largement ses capacités de résistance en traction et en compression. La résistance est augmentée même aux points de faiblesse de la structure, en particulier au niveau des brides d'assemblage 3a, puisque le renforcement comprenant les joncs de carbone incorporés dans le coulis de ciment est réparti sur toute la longueur de la structure tubulaire 1 et traverse en particulier ces points de faiblesse.

En variante, le produit de remplissage durcissable injecté à l'intérieur de la structure tubulaire 1 peut être un béton liquide de liant minéral, par exemple à ultra performance fibré, ou bien un coulis ou un béton de liant synthétique. Il peut également s'agir d'une résine de remplissage.

L'adhérence du produit de remplissage sur la surface interne de la structure tubulaire 1 peut être améliorée par exemple par effet de frettage ou bien grâce à la présence de bourrelets de soudure et de raidisseurs internes à la structure.

La figure 2 montre un jonc de carbone 4 dont une portion a été enduite d'une résine 11. Cette résine est de préférence synthétique. Il peut par exemple s'agir d'une résine époxyde. Un dépôt d'agrégat 10 a en outre été placé sur la résine époxyde pour être adhérisé au jonc 4. Cet agrégat peut par exemple comprendre du sable sec d'environ 0,8 mm de calibre. L'adhérence du sable 10 au jonc de carbone 4 est ainsi obtenue avantageusement à l'aide de la résine de même nature que la matrice du composite remplissant l'intérieur de la structure tubulaire 1. L'adhérence du jonc 4 au coulis de ciment est accrue par l'interface minérale du sable et la rugosité qu'il procure en périphérie du jonc.

De façon avantageuse, les joncs de carbone 4 peuvent en outre présenter des reliefs tels que des stries sur leur périphérie, de façon à augmenter encore l'adhérence de forme au coulis de ciment. Dans le cas où des torons sont introduits dans la structure tubulaire, plutôt que des joncs de carbone, leur surface hélicoïdale permet une telle adhérence de forme.

Selon un mode de réalisation avantageux de l'invention, des fils sont accrochés sur des portions de certains joncs de carbone 4 correspondant à certaines parties de la structure tubulaire 1 qu'on souhaite particulièrement renforcer.

## Revendications

1. Procédé de renforcement d'une structure tubulaire métallique (1) en fonctionnement comprenant les étapes suivantes:
- introduire à l'intérieur de la structure tubulaire métallique (1) en fonctionnement, une pluralité d'éléments (4) sensiblement linéaires ayant une résistance à la traction supérieure à une valeur prédéterminée, et
- injecter un produit de remplissage durcissable à l'intérieur de la structure tubulaire métallique en fonctionnement, de façon à ce que le produit de remplissage durcissable vienne en contact avec une surface interne de la structure tubulaire métallique (1) en fonctionnement et enrobe les éléments (4) sensiblement théâtres de ladite pluralité.

2. Procédé selon la revendication 1, dans lequel les éléments (4) sensiblement linéaires de ladite pluralité comprennent des joncs de carbone.

3. Procédé selon la revendication 1 ou 2, dans lequel les éléments (4) sensiblement linéaires de ladite pluralité comprennent des fils et/ou des torons.

4. Procédé selon l'une quelconque des revendications précédentes, dans lequel la structure tubulaire métallique (1) est installée de façon à avoir une extrémité inférieure ancrée et une extrémité supérieure libre, et dans lequel les éléments (4) sensiblement linéaires de ladite pluralité sont introduits à partir de ladite extrémité supérieure libre de la structure tubulaire métallique.

5. Procédé selon l'une quelconque des revendications précédentes, dans lequel les éléments (4) sensiblement linéaires de ladite pluralité sont introduits à l'intérieur de la structure tubulaire métallique de façon à former un faisceau dont la répartition géométrique est prédéterminée.

6. Procédé selon la revendication 5, dans lequel les éléments (4) sensiblement linéaires de ladite pluralité sont introduits à l'intérieur de la structure tubulaire métallique (1) par l'intermédiaire de trous respectifs d'une grille (6) reliée à la structure tubulaire métallique.

7. Procédé la revendication 6, dans lequel les éléments (4) sensiblement linéaires de ladite pluralité sont ancrés sur la grille (6) après avoir été introduits à l'intérieur de la structure tubulaire métallique (1).

8. Procédé selon la revendication 7, dans lequel la structure tubulaire métallique (1) est installée de façon à avoir une extrémité inférieure ancrée et une extrémité supérieure libre, dans lequel les éléments (4) sensiblement linéaires de ladite pluralité sont en outre introduits à partir de ladite extrémité supérieure libre de la structure tubulaire métallique par l'intermédiaire de trous respectifs d'un lest (7), les trous du lest étant répartis de façon sensiblement correspondante aux trous de la grille (6), et dans lequel on fait descendre le lest, à l'aide d'un filin (8), depuis la grille vers l'extrémité inférieure de la structure tubulaire métallique après avoir ancré les éléments sensiblement linéaires de ladite pluralité sur la grille.

9. Procédé selon l'une quelconque des revendications précédentes, dans lequel le produit de remplissage durcissable comprend un coulis de ciment.

10. Procédé selon l'une quelconque des revendications précédentes, dans lequel le produit de remplissage durcissable comprend un béton liquide de liant minéral ou synthétique.

11. Procédé selon l'une quelconque des revendications précédentes, dans lequel le produit de remplissage durcissable comprend une résine.

12. Procédé selon l'une quelconque des revendications précédentes, dans lequel un agrégat (10) est fixé sur la périphérie des éléments (4) sensiblement linéaires de ladite pluralité à l'aide d'une résine (11) avant l'introduction desdits éléments sensiblement linéaires à l'intérieur de la structure tubulaire métallique (1).

13. Procédé selon l'une quelconque des revendications précédentes, dans lequel les éléments (4) sensiblement linéaires de ladite pluralité comprennent des reliefs tels que des stries sur leur périphérie.

14. Procédé selon l'une quelconque des revendications précédentes, dans lequel des fils sont accrochés sur au moins une portion de certains au moins des éléments (4) sensiblement linéaires de ladite pluralité pour renforcer davantage des portions correspondantes de la structure tubulaire métallique (1).

## Claims

1. A method of reinforcing a metallic tubular structure (1) in operation, comprising the steps of:
- introducing inside the metallic tubular structure (1), a plurality of substantially linear elements (4) having a tensile strength greater than a predetermined value, and
- injecting a curable filling product inside the metallic tubular structure, so that the curable filling product comes into contact with an internal surface of the metallic tubular structure (1) in operation and coats the substantially linear elements (4) of said plurality.

2. The method as claimed in claim 1, wherein the substantially linear elements (4) of said plurality comprise carbon rods.

3. The method as claimed in claim 1 or 2, wherein the substantially linear elements (4) of said plurality comprise wires and/or strands.

4. The method as claimed in any one of the preceding claims, wherein the metallic tubular structure (1) is installed so as to have an anchored lower end and a free upper end, and wherein the substantially linear elements (4) of said plurality are introduced from said free upper end of the metallic tubular structure.

5. The method as claimed in any one of the preceding claims, wherein the substantially linear elements (4) of said plurality are introduced inside the metallic tubular structure so as to form a bundle of which the geometrical distribution is predetermined.

6. The method as claimed in claim 5, wherein the substantially linear elements (4) of said plurality are introduced inside the metallic tubular structure (1) via respective holes of a mesh (6) connected to the metallic tubular structure.

7. The method as claimed in claim 6, wherein the substantially linear elements (4) of said plurality are anchored on the mesh (6) after having been introduced inside the metallic tubular structure (1).

8. The method as claimed in claim 7, wherein the metallic tubular structure (1) is installed so as to have an anchored lower end and a free upper end, wherein the substantially linear elements (4) of said plurality are also introduced from said free upper end of the metallic tubular structure via respective holes of a ballast weight (7), the holes of the ballast weight being distributed in a manner substantially corresponding to the holes of the mesh (6), and wherein the ballast weight is lowered with the aid of a cable (8), from the mesh toward the lower end of the metallic tubular structure after having anchored the substantially linear elements of said plurality on the mesh.

9. The method as claimed in any one of the preceding claims, wherein the curable filling product comprises cement grout.

10. The method as claimed in any one of the preceding claims, wherein the curable filling product comprises liquid concrete with a mineral or synthetic binder.

11. The method as claimed in any one of the preceding claims, wherein the curable filling product comprises resin.

12. The method as claimed in any one of the preceding claims, wherein an aggregate (10) is attached to the periphery of the substantially linear elements (4) of said plurality using resin (11) before said substantially linear elements are introduced inside the metallic tubular structure (1).

13. The method as claimed in any one of the preceding claims, wherein the substantially linear elements (4) of said plurality have protrusions such as serrations on their periphery.

14. The method as claimed in any one of the preceding claims, wherein wires are attached on at least one portion of at least some of the substantially linear elements (4) of said plurality so as to further reinforce the corresponding portions of the metallic tubular structure (1).

## Patentansprüche

1. Verfahren zur Verstärkung einer metallischen Rohrstruktur (1) im Betrieb, das die folgenden Schritte enthält:
- Einführen ins Innere der metallischen Rohrstruktur (1) im Betrieb einer Vielzahl von im Wesentlichen linearen Elementen (4), die eine höhere Zugfestigkeit als ein vorbestimmter Wert haben, und
- Injizieren eines härtbaren Füllprodukts ins Innere der metallischen Rohrstruktur im Betrieb, damit das härtbare Füllprodukt mit einer Innenfläche der metallischen Rohrstruktur (1) im Betrieb in Kontakt kommt und die im Wesentlichen linearen Elemente (4) der Vielzahl umhüllt.

2. Verfahren nach Anspruch 1, bei dem die im Wesentlichen linearen Elemente (4) der Vielzahl Kohlenstoffstäbe enthalten.

3. Verfahren nach Anspruch 1 oder 2, bei dem die im Wesentlichen linearen Elemente (4) der Vielzahl Drähte und/oder Litzen enthalten.

4. Verfahren nach einem der vorhergehenden Ansprüche, bei dem die metallische Rohrstruktur (1) so eingebaut ist, dass sie ein verankertes unteres Ende und ein freies oberes Ende hat, und bei dem die im Wesentlichen linearen Elemente (4) der Vielzahl ausgehend von dem freien oberen Ende der metallischen Rohrstruktur eingeführt werden.

5. Verfahren nach einem der vorhergehenden Ansprüche, bei dem die im Wesentlichen linearen Elemente (4) der Vielzahl ins Innere der metallischen Rohrstruktur so eingeführt werden, dass sie ein Bündel bilden, dessen geometrische Verteilung vorbestimmt ist.

6. Verfahren nach Anspruch 5, bei dem die im Wesentlichen linearen Elemente (4) der Vielzahl ins Innere der metallischen Rohrstruktur (1) über jeweilige Löcher eines Gitters (6) eingeführt werden, das mit der metallischen Rohrstruktur verbunden ist.

7. Verfahren nach Anspruch 6, bei dem die im Wesentlichen linearen Elemente (4) der Vielzahl auf dem Gitter (6) verankert werden, nachdem sie ins Innere der metallischen Rohrstruktur (1) eingeführt wurden.

8. Verfahren nach Anspruch 7, bei dem die metallische Rohrstruktur (1) so eingebaut wird, dass sie ein verankertes unteres Ende und ein freies oberes Ende hat, bei dem die im Wesentlichen linearen Elemente (4) der Vielzahl außerdem ausgehend von dem freien oberen Ende der metallischen Rohrstruktur über jeweilige Löcher eines Ballasts (7) eingeführt werden, wobei die Löcher des Ballasts im Wesentlichen entsprechend den Löchern des Gitters (6) verteilt sind, und bei dem der Ballast mit Hilfe eines Drahtseils (8) vom Gitter zum unteren Ende der metallischen Rohrstruktur nach unten bewegt wird, nachdem die im Wesentlichen linearen Elemente der Vielzahl auf dem Gitter verankert wurden.

9. Verfahren nach einem der vorhergehenden Ansprüche, bei dem das härtbare Füllprodukt einen Zementbrei enthält.

10. Verfahren nach einem der vorhergehenden Ansprüche, bei dem das härtbare Füllprodukt einen Flüssigbeton eines mineralischen oder synthetischen Bindemittels enthält.

11. Verfahren nach einem der vorhergehenden Ansprüche, bei dem das härtbare Füllprodukt ein Harz enthält.

12. Verfahren nach einem der vorhergehenden Ansprüche, bei dem ein Aggregat (10) am Umfang der im Wesentlichen linearen Elemente (4) der Vielzahl vor der Einführung der im Wesentlichen linearen Elemente ins Innere der metallischen Rohrstruktur (1) mit Hilfe eines Harzes (11) befestigt wird.

13. Verfahren nach einem der vorhergehenden Ansprüche, bei dem die im Wesentlichen linearen Elemente (4) der Vielzahl Reliefs wie Riefen auf ihrem Umfang enthalten.

14. Verfahren nach einem der vorhergehenden Ansprüche, bei dem Drähte auf mindestens einem Abschnitt zumindest bestimmter der im Wesentlichen linearen Elemente (4) der Vielzahl befestigt sind, um entsprechende Abschnitte der metallischen Rohrstruktur (1) noch mehr zu verstärken.
